# EUROPEAN PATENT APPLICATION

(11) **EP 3 264 288 A1**
(43) Date of publication of application: **03.01.2018**
(21) Application number: 16176998.9
(22) Date of filing: 29.06.2016
(51) Int. Cl.: G06F 17/30

(54) **DATABASE CONFIGURATION AND REPLICATION**

(71) Applicant: Fleetcor Europe Limited, London SW1P 2NU (GB)
(72) Inventor: HYDE, James, North Yorkshire, HG5 8QB (GB); BENNETT, Jonathan, North Yorkshire, HG5 8QB (GB); LLOYD, Kevin, North Yorkshire, HG5 8QB (GB)
(74) Representative: Carpmaels & Ransford LLP

(57) **Abstract**

A configuration of master data in a master database and a subset of slave databases is updated from a first configuration defining a first schema to a second configuration defining a second schema of a database service. Additionally, a configuration of the shared data in the master database and a subset of slave databases is updated from the first configuration defining the first schema to the second configuration defining the second schema of the database service. The master data and shared data is then replicated across each subset of the plurality of slave database servers according to the different configurations.

## Description

### Field of Disclosure

The present disclosure relates to the provision of a database service, in particular the provision of database service which is hosted by a master database and shared across multiple slave databases.

### Background

Database services traditionally support the sharing of data across multiple sites ("sharing in space") in a one-to-one or one-to-multiple sharing arrangement whereby data is replicated from one master database server to another slave database server or multiple slave database servers. Data changes in the master database ripple down to the slave databases shortly after the changes have occurred in the master database. In addition, changes to the slave database which are not caused by the master database changes, i.e. changes made by an external source to the slave database, ripple back up to the master database and then spread out to the remaining slave databases. The configuration of the master and slave databases must be broadly similar such that the same data can be shared accurately between two databases. This means that the same database schema has to be utilised for the master and slave databases. Data can then be passed between the master database and the slave databases safe in the knowledge that the data will be correctly replicated across all of the databases. If different database schemas, i.e. different database configurations were to be utilised for the various master and slave databases, then data errors could be introduced during the data transfer. Hence, for this reason, databases which are not broadly of the same configuration, e.g. utilising broadly the same schema or version, are not normally permitted to operate in master-slave type arrangement.

This causes problems for database systems which are run by a master provider, for example with a master database server hosted in one location under the control of the master provider, and with slave database servers, hosted in other locations under the control of multiple, different providers. The different providers may desire to use different configurations for their slave databases and servers with respect to each other, and with respect to the master database server. This can mean that different database schemas and/or versions end up being utilised for the master and slaves. The reasons for this may be technical, e.g. different hardware, different operating system versions, different database hosting software versions etc., or regulatory, e.g. business requirements at particular server sites requiring particular server software and hardware to be utilised. These problems are compounded and made difficult to manage where the various database servers are located across many different sites at different locations around the world, e.g. in different countries. Moreover, these problems are made even more difficult when different organisations control the various database servers, such that, for example, the organisation controlling the master database may not have direct control over the slave databases which could each be individually controlled by different organisations.

A further issue exists with master-slave database services where two types of data are utilised, namely: (i) master data, which is shared by the master database with the slave databases, but which cannot be changed or updated at the slave databases - it can only be input directly to the master database; and (ii) shared data, which is data which can be updated at both the master database and slave databases and shared therebetween. It is desirable to ensure that both the master data and shared data can be shared between all databases accurately within the constraints of the overall database system and the various database schemas and versions being utilised. In particular, the shared data may be updated on one slave database utilising one particular database configuration and other slave databases (possibly also including master database) may utilise another database configuration.

It is desirable to reduce the database compatibility issues that arise as a result of the above problems.

### Summary of the Disclosure

The invention of the present disclosure aims to solve the aforementioned problems and is defined in the appendant claims. The invention is also summarised below according to various embodiments.

In a first aspect of the present disclosure, there is provided a method for updating a database service hosted by a master database server in conjunction with a plurality of slave database servers, comprising:
(i) updating a configuration of master data of the database service from a first configuration of the database service to a second configuration of the database service;
(ii) updating a configuration of shared data of the database service from the first configuration to the second configuration;
(iii) replicating the master data and shared data across a first subset of the plurality of slave database servers according to the first configuration; and
(iv) replicating the master data and shared data across a second subset of the plurality of slave database servers according to the second configuration.

Accordingly, updating of the database service from one configuration to another can be done on a partial basis so that the database service can still be provisioned across multiple slave database servers, without having all slave database servers configured in the same way and according to the same database schema.

The first subset may comprise one or more slave database servers of the plurality of slave database servers. The second subset may comprise one or more slave database servers of the plurality of slave database servers. Thus, there are distinct groups of servers utilising different configurations of the database service.

Each of the first subset of the plurality of slave database servers and the second subset of the plurality of slave database servers may not comprise any slave database server which is comprised in the other subset.

The first configuration and second configuration can each define different database structures of the database service. The second configuration may be an updated database structure of the first configuration.

The second configuration may comprise one or more extensions to the database structure of the first configuration. The second configuration may comprise a modified database schema with respect to a database scheme of the first configuration. The modified database schema can comprise one or more additional tables, fields and/or columns with respect to the database schema of the first configuration.

The modified database schema may comprise at least one modified default value for a field or column of the modified database schema of the second configuration with respect to the database schema of the first configuration.

Step (i) may comprise storing the master data updated according to the second configuration in the master database server. Step (ii) may comprise storing the shared data updated according to the second configuration in the master database server.

Step (iii) may comprise replicating the master data and shared data across the first subset of the plurality of slave database servers according to the first configuration by:
(iii-a) removing one or more data elements of the master data and/or shared data thereby providing updated master data and/or updated shared data according to the first configuration for the first subset of the plurality of slave database servers, the one or more data elements being data elements not supported under the first configuration.

The data elements not supported under the first configuration may comprise one or more additional fields or columns supported under the second configuration, but not supported under the first configuration.

Step (iii) may also or alternatively comprises replicating the master data and shared data across the first subset of the plurality of slave database servers according to the first configuration by:
(iii-b) restructuring the updated master data and/or updated shared data so that it conforms to a database schema of the first configuration; and
(iii-c) storing the restructured updated master data and/or shared data in the first subset of the plurality of slave database servers.

Step (iii) can be performed, in part or in its entirety, by a database distribution server in communication with the master database server and additionally in communication the first subset of the plurality of slave database servers. Step (iii-a) can be performed by the database distribution server and step (iii-c) can be performed by the first subset of the plurality of slave database servers. Step (iii-b) can be performed by the database distribution server and step (iii-c) can be performed by the first subset of the plurality of slave database servers.

Step (iv), in part or in its entirety, may be performed by the database distribution server or an additional one of the database distribution servers.

Step (iii) may comprise replicating the master data and shared data across the first subset of the plurality of slave database servers according to a first replication process which is unique to the first configuration. The first replication process may be compatible only with the first configuration.

Step (iv) may comprise replicating the master data and shared data across the second subset of the plurality of slave database servers according to a second replication process which is unique to the second configuration. The second replication process may be compatible only with the second configuration.

The master and shared data may be stored in the master database server which may be accessible to the plurality of slave database servers, optionally via a database distribution server. The master data can be inputable into the database service from an external source only via the master database server. The master data may be updatable only within the master database server from an external source, and not via any one of the plurality of slave database servers.

The plurality of slave database servers may be configured to update the shared data and exchange the shared data with each other via the master database server, optionally via a database distribution server.

In a second aspect of the disclosure, there is provided a computer readable medium comprising computer executable instructions which, when executed by one or more processors, cause the one or more processors to perform the steps of the aforementioned methods.

In a third aspect of the present disclosure, there is provided a master database server comprising:
memory for storing master data and shared data of a database service; and
processing circuitry configured to:
   update a configuration of master data of the database service from a first configuration of the database service to a second configuration of the database service;
   update a configuration of shared data of the database service from the first configuration to the second configuration;
   replicate the master data and shared data across a first subset of the plurality of slave database servers according to the first configuration; and
   replicate the master data and shared data across a second subset of the plurality of slave database servers according to the second configuration.

The processing server may be configured to replicate the master data and shared data across a first subset of the plurality of slave database servers according to the first configuration by sending the master data and shared data according to the second configuration to a database distribution server or a plurality of database distribution servers with a request to replicate the master data and shared data across the first subset of the plurality of slave database servers according to the first configuration, and across a subset of the plurality of slave database servers according to the first configuration.

In a fourth aspect of the present disclosure, there is provided a database distribution server comprising processing circuitry configured to receive master data and shared data of a database service from a master database server and distribute the master data and shared data to a plurality of slave database servers according to a first configuration or a second configuration,

In a fifth aspect of the present disclosure, there is provided a slave database server hosting a local database service comprising:
processing circuitry configured to:
   receive master data and/or shared data of a first configuration from a master database server, and store the master data and/or shared data of the first configuration in memory;
   update the local database service from the first configuration to a second configuration; and
   if the local database service has been updated from the first configuration to the second configuration, receive master data and/or shared data of a second configuration from the master database server, and store the master data and/or shared data of the second configuration in memory.

The master data and/or shared data may be received from the master database server via a database distribution server.

The processing circuitry may be further configured to send, once the local database service has been updated from the first configuration to the second configuration prior to receiving the master data and/or shared data, a request to the master database server to obtain the master data and/or the shared data of the second configuration.

The processing circuitry may be further configured to send, once the local database service has been updated from the first configuration to the second configuration prior to receiving the master data and/or shared data, a slave configuration message to the master database server, wherein the slave configuration message may be indicative that the local database service of the database server has been updated from the first configuration to the second configuration.

The processing circuitry may be configured to receive a replication request from the master database server and in response send shared data of the local database service in the first or second configuration, dependent on a current configuration of the local database service, from the memory accessible to the local database server to the master database server for storage therein according to the second configuration.

In a sixth aspect of the present disclosure, there is provided a user equipment device comprising:
processing circuitry configured to:
   send a request to the slave database server as defined above for the master data and/or shared data;
   receive the master data and/or shared data according to the first configuration or second configuration dependent on whether the local database service of the slave database server has been updated from the first configuration to the second configuration; and
   store the received master data and/or shared data in memory accessible to the user equipment device.

The processing circuitry may be configured to send data to the slave database server for storage in the slave database server as shared data.

In a seventh aspect of the present disclosure, there is provided a system comprising:
the master database server as defined above; and
a plurality of slave database servers each being the slave database server as defined above, and each being in communication with the master database server.

The database distribution server may be in communication with the master database server and each slave database server of the plurality of database servers. The system can further comprise a plurality of user equipment devices each being the user equipment device as previously defined. Each user equipment device may be configured to have restricted access only to a given one of the slave database servers. The user equipment can access the master data and/or shared data of the slave database server.

In a seventh aspect of the present disclosure, there is provided a method of updating a slave database comprising using the slave database as defined and configured to provide a database service of a given configuration which is either the first configuration or the second configuration and obtain replicated master and shared data according to the given configuration from the master database server, optionally via the database distribution server as defined above.

### Brief Description of Drawings

The present invention is described in exemplary embodiments below with reference to the accompanying drawings in which:
Fig. 1 is a representation of a database system according one embodiment of the present disclosure;
Fig. 2 is a representation of a database system according another embodiment of the present disclosure;
Fig. 3 is a representation of components forming the systems of Fig. 1 or Fig. 2; and
Fig. 4 is a representation of database content utilised according to the systems of Fig. 1 or Fig. 2.

### Detailed Disclosure

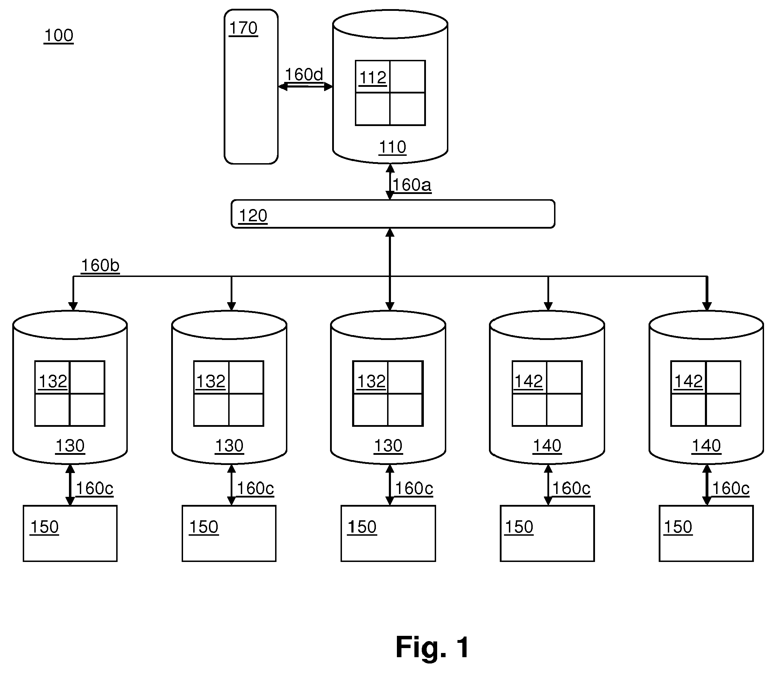

Referring to Fig. 1, a database system 100 implemented according to one embodiment of this disclosure is described. It will be appreciated that the depicted embodiment is only one example of how the invention may be implemented.

The system 100 comprises a master database server 110 providing a master database 112. The master database server 110 is in communication with a database distribution server 120 which itself is in communication with a plurality of slave database servers 130, 140, each providing a slave database 132, 142. User equipment (UE) devices 150 can be in communication with each slave database server 130, 140.

The master database server 110 is also in communication with master database input device 170 which may be a standalone data input device configured to update and configure the data in the master database 112, including the data content and configuration and/or master database schema. The master database input device 170 may be a server or client computer under direct control of the database administrator and thereby be configured with master database administration access rights. In contrast, the UE devices 150 are configured not to update the master database server 110 directly, and are not provisioned with access therefor. In addition, as explained in further detail below, the slave database servers 130, 140 are configured to update only a portion of the data in the master database 112 based on a portion of data stored in each of their own slave databases 132, 142.

Communication between the master database server 110, the database distribution server 120, the plurality of slave database servers 130, 140, the master data input device 170, and/or the user equipment (UE) devices 150 takes place over at least one communication network 160a, 160b, 160c, 160d, such as one or more packet switched communication networks. The network(s) may be formed on one or more local area or wide area networks, such as the Internet. The network may be former by wired or wireless connections using one or a combination of standards, such as TCP/IP, Ethernet 802.X, 3G, HSDPA, LTE etc.

The slave database servers 130, 140 are grouped into a plurality of two or more subsets, each subset containing at least one slave database server 130, 140. Each subset is defined by the configuration of the slave database servers contained therein, in particular the configuration of the slave databases 132, 142 themselves. For example, as explained in further detail below, the configuration of the slave databases 132, 142 may be defined by the particular schema of the database adopted. Each subset can comprise databases of the same or similar version in terms of configuration and/or schema. For example, slave database servers 130 of an earlier database schema corresponding to a first configuration, e.g. earlier version, of the master database 112 are in a first subset comprising slave databases 132. Slave database servers 140 of a later, e.g. current database schema, corresponding to a second configuration, which is also the schema or configuration of the master database 112, are in a second subset comprising slave databases 142. Thus, in the depicted embodiment of Fig. 1, slave databases 142 of the second subset are setup according to the configuration of the master database 112 (e.g. a later version of a schema previously utilised by the master and slaves), whilst slave databases 132 of the first subset are of a different configuration (e.g. an earlier version of the master database schema).

The database distribution server 120 maintains a slave database configuration register which identifies each slave database 132, 142 according to its configuration and schema, and thus to which slave server subset it belongs. In this embodiment, redirection and control of data push to the slave server subsets is performed by the database distribution server 120. The master database server 110 simply pushes its data to the database distribution server 120, which then determines whether custom replication needs to be performed for data being redirected to custom subsets.

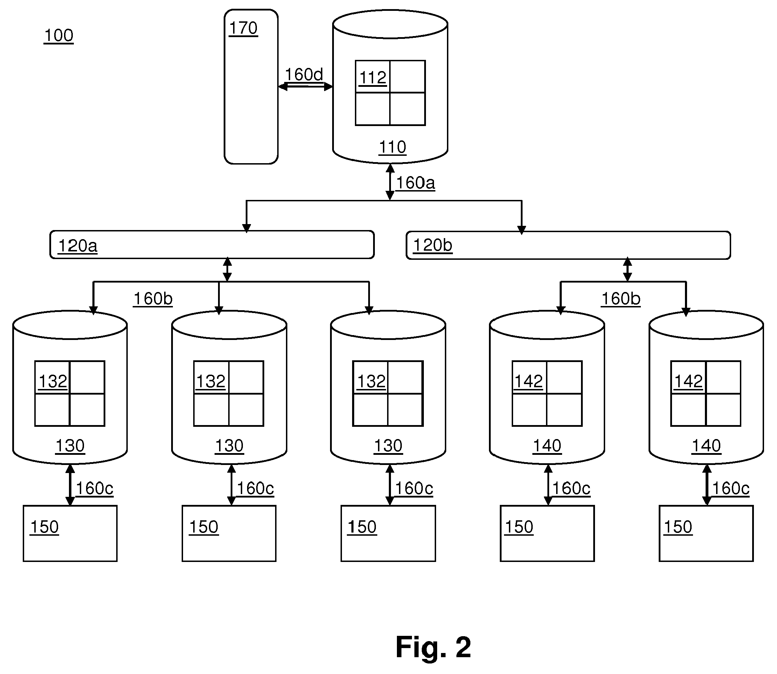

Fig. 2 shows an alternative embodiment which is a variation of the embodiment of Fig. 1 in which, for each subset of slave database servers 130, 140, a separate database distribution server 120a, 120b is provided. The functionality of the database distribution servers 120a, 120b in this embodiment is similar to the single database distribution server 120 of Fig. 1, except that control and redirection of data to the subsets is performed by the master database server 110 according to a slave database configuration register. The database distribution server 120 continues to perform custom replication for its associated subset of slave database servers 130. It will be appreciated that, when the configuration of the second subset of slave database servers 140 is the same as the master database server 110, the database distribution server 120b may not be required and the master database server simply pushes its data to the slave database servers 140, whereas data for the slave database servers 130 of the first subset need to be processed and replicated in a custom manner.

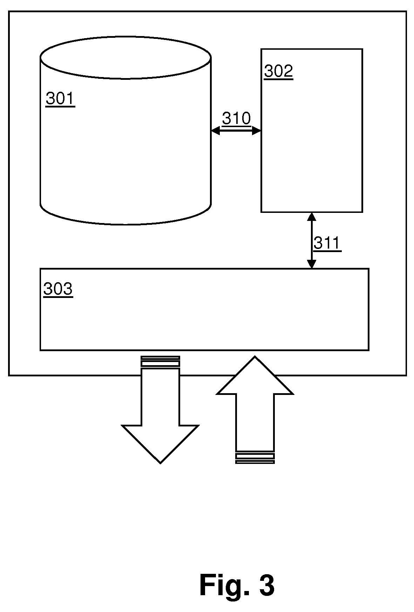

With reference to Fig. 3, each database server, namely master database server 110, and slave database servers 130, 140 along with database distribution server 120 and each user equipment device 150, are formed of common components including memory 301, processing circuitry 302 and input-output interface 303. The memory 301 may be one or more of a combination of read access memory, such as, for example: flash (SDD), DRAM, hard disk (HDD). Such memory 301 may be mirrored for backup purposes, e.g. via RAID. The memory 301 is connected via a data bus 310 to the processing circuitry 302. The memory 301 can store computer executable instructions in the form of a non-transitory computer program which can be obtained by the processing circuitry and executed to perform the functionality of the server or user equipment in accordance with the present disclosure. In the case of the database servers 110, 130, 140, the memory 301 is additionally configured to store data for the databases, including both database content and database schema and configuration information (see below).

The input-output interface 303 may comprise one or more of: a network interface for communication of the server or UE device 150 with the at least one communication network 160a, 160b, 160c, data/user interface input means (not shown) for inputting data into the server or UE device directly, e.g. keyboard, pointing device or touch sensitive interface, such as touch display, and optionally display screen (not shown) for outputting data directly from the device.

The processing circuitry 302 is connected for bidirectional communication via internal bus 311 with the input-output interface 303, such that data obtained from the memory 301 can be processed and output externally, e.g. to the at least one communication network 160a, 160b, 160c or connected display screen of the server or UE device (not shown). Input can be received into the server or UE device via the input-output interface, e.g. from the data/user interface input means, can thereby be processed by the server or UE device and stored in the memory 301.

The processing circuitry 302 may be formed of one or more processors each of which or together (e.g. in a pipelined parallel architecture) executes the executable instructions to perform the relevant functions of the server or UE device. The executable instructions thereby provide the database server functionality for obtaining from the memory 301, and also storing therein, database content and database schema and configuration information in the master and or slave databases 110, 130, 140. The processing circuitry is configured to store the content data according to a defined configuration of the database which defines the database schema.

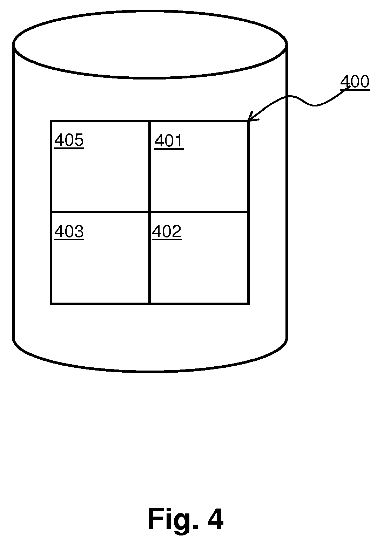

The database schema and data content is described in more detail with reference to Fig. 4. The data 400 stored in each of the databases, namely the master database 112, and slave databases 132, 142, is split into three types of data content, namely master data 401, shared data 402 and local data 403. In addition, each database has a defined database schema 405 which is permitted according to the configuration of the database, e.g. the first or second configuration mentioned above of the corresponding first or second slave database server subsets. The database schema 405 defines the structure of the database 400, in that it stores data which characterises the way in which the master data 401 and shared data 402, and optionally the local data 403, are to be stored in the database 400. In essence, in one embodiment, this means that the schema 405 data defines one or more of the following features for the database 400: database tables; fields; database columns; and/or data types for the fields and/or columns.

The master data 401 is typically data which can only be updated in the master database 112 by direct input from the master data input device 170, and not by the slave databases 132, 142. Upon changes to the master data 401, this data is pushed to the slave databases 132 across the communication network 160b under control of the master database server 110 such that each slave database 132, 142 eventually contains a copy of the master data 401. In this way, the master data 401 is data which is necessary for operation of and defines key features of the database system 100 as defined by the master database 112, rather than data which is continuously changed and updated by the slave databases 132, 142. The master data 401 may be identifiable in the master and shared databases 112, 132, 142 by a master data flag associated with each data item.

In contrast, the shared data 402 is data which can be updated indirectly in the master database 112 by the slave databases 132, 142. Upon changes to the shared data 402 in one slave database 132, 142, this data is sent to the master database 112, which is configured, upon such changes being received, to push it out across all other slave databases 132 via the communication network 160b, such that each slave database 132, 142 eventually contains a copy of shared data 402 as present in all of the slave databases 132, 142. In this way, the shared data 402 is continuously changed and updated by the slave databases 132, 142. The shared data 402 may be identifiable in the master and shared databases 112, 132, 142 by a shared data flag, associated with each data item.

The local data 403 which can be present in the master and slave databases 112, 132, 142 is data which is typically stored only locally within its server. This does not mean necessarily that the data is unique to its database in the sense that it is not stored in any other database, but it is data which is not shared across the other databases, unlike the master and shared data 401, 402.

The master data 401, shared data 402 and local data 403 are all stored according to schema 405 which can be one of a plurality of different schemas for the database system 100 as permitted by the master database server 110 which effectively defines the server configuration. Each database 112, 132 and 142 can have different schemas and thus different configurations, as explained in further detail below. The upgrading of slave database schemas may happen locally on the slave database 132, 142. Update instructions to update a given slave database server 132 from a first configuration to a second configuration can be sent by the master database server 110 itself, or a third party with access to the given slave database server, for example UE device 150. As mentioned above, the master database server 110 and/or database distribution server 120 maintains a slave database configuration register which identifies each slave database 132, 142 according to its configuration and thus to which server subset it belongs.

For the purposes of the present disclosure, the master database 112 is configured according to a second configuration which defines, for example a later version of the database schema, thereby providing master functionality, where possible, to all slave databases 132, 142. However, certain slave databases 132 of a first subset may not be configured to implement this schema and will be of a different, first configuration. This might be because the slave databases 132 of this first subset have not yet been upgraded with the latest schema for practical reasons, for example due to technical or logistical restrictions. In one embodiment, the second configuration defines the second schema of the second subset in such a way that it includes the schema based on the first configuration of the first subset. This may mean that all features of the first schema are included within the second schema. Additionally, the second schema defined by the second configuration of the second subset may comprise additional features. For example, the second schema defined by the second configuration may define one or more additional database tables; fields; database columns; and/or data types for the fields and/or columns with respect to the first schema.

In a traditional master-slave database system, all slave databases would have to be configured according to the same or similar schema for proper functioning of the database system. This is because the mapping of features between the master and slave databases needs to occur so that the data content can be transferred without error, for example during a replication process from the master database to the slave databases.

According to one embodiment of the present disclosure, the interoperability of the slave databases 132, 142 of the first and second subsets with the master database 112 is handled by the database distribution server 120, or database distribution servers 120a, 120b. A principal function of the database distribution server 120 is to ensure that slave databases 132 in the first subset which are of a different configuration and schema to the master database 112 can receive the master data 401 and shared data 402 in a form which is suitable for storage in their database according to the first configuration and schema. This is achieved by a custom replication process in the database distribution server 120.

The custom replication process replicates the master data in the most recent version schema according to the second configuration, and transforms the data back to the older schema of the slave database 132 configured according to the first configuration. This can be done by a custom stored procedure in the database distribution server which is applied to override the default database generated procedures. During this process, data elements not yet supported by the slave database are discarded, and the remaining data is restructured to the slave schema according to the first configuration.

Additionally, a function of the database distribution server 120 is to ensure that the shared data 402 of the first subset of slave databases 132 can be sent to the master database 112 in a form which is appropriate for its storage in master database 112 according to the second configuration or schema.

The functionality of the present disclosure according to the above embodiments can be implemented as follows. A configuration of the master data 401 in the master database 112 and a subset of slave databases 142 is updated from a first configuration defining a first schema to a second configuration defining a second schema of a database service. Additionally, a configuration of the shared data 402 in the master database 112 and a subset of slave databases 142 is updated from the first configuration defining the first schema to the second configuration defining the second schema of the database service. The master data 401 and shared data 402 is pushed out upon changes made within the master database 112, to the slave databases 132, 142 via the database distribution server 120. Based on the information within its slave database configuration register, the database distribution server 120 identifies which shared database servers 130 are configured according to the first configuration. The master data 401 and shared data 402 as received from the master database server 110 can then be replicated according to a custom process across the first subset of the plurality of slave database servers 130 according to the first configuration.

The database distribution server 120 also identifies which shared database servers 130 are configured according to the second configuration. The master data 401 and shared data 402 can also then be replicated by sending the master and shared data 401, 402 in the form received from the master database 112, out across a second subset of the plurality of slave database servers for storage according to the second configuration.

It will be appreciated that the invention of the present disclosure has been described above by way of example only, and that modifications may be made within the scope of the general disclosure in accordance with the invention defined by the independent claims.

The following is a non-exhaustive list of embodiments which may be claimed:
1. A method for updating a database service hosted by a master database server in conjunction with a plurality of slave database servers, comprising:
   (i) updating a configuration of master data of the database service from a first configuration of the database service to a second configuration of the database service;
   (ii) updating a configuration of shared data of the database service from the first configuration to the second configuration;
   (iii) replicating the master data and shared data across a first subset of the plurality of slave database servers according to the first configuration; and
   (iv) replicating the master data and shared data across a second subset of the plurality of slave database servers according to the second configuration.
2. The method of embodiment 1, wherein the first subset comprises one or more slave database servers of the plurality of slave database servers.
3. The method of embodiment 1 or embodiment 2, wherein the second subset comprises one or more slave database servers of the plurality of slave database servers.
4. The method of any one of the preceding embodiments, wherein each of the first subset of the plurality of slave database servers and the second subset of the plurality of slave database servers does not comprise any slave database server which is comprised in the other subset.
5. The method of any one of the preceding embodiments, wherein the first configuration and second configuration each define different database structures of the database service.
6. The method of embodiment 5, wherein the second configuration is an updated database structure of the first configuration.
7. The method of embodiment 5 or embodiment 6, wherein the second configuration comprises one or more extensions to the database structure of the first configuration.
8. The method of any one of embodiments 5 to 7, wherein the second configuration comprises a modified database schema with respect to a database scheme of the first configuration.
9. The method of embodiment 8, wherein the modified database schema comprises one or more additional fields or columns with respect to the database schema of the first configuration.
10. The method of embodiment 8, wherein the modified database scheme comprises at least one modified default value for a field or column of the modified database schema of the second configuration with respect to the database schema of the first configuration.
11. The method of any one of the preceding embodiments, wherein step (i) comprises storing the master data updated according to the second configuration in the master database server.
12. The method of any one of the preceding embodiments, wherein step (ii) comprises storing the shared data updated according to the second configuration in the master database server.
13. The method of any one of the preceding embodiments, wherein step (iii) comprises replicating the master data and shared data across the first subset of the plurality of slave database servers according to the first configuration by:
   (iii-a) removing one or more data elements of the master data and/or shared data thereby providing updated master data and/or updated shared data according to the first configuration for the first subset of the plurality of slave database servers, the one or more data elements being data elements not supported under the first configuration.
14. The method of embodiment 13, wherein the data elements not supported under the first configuration comprise one or more additional fields or columns supported under the second configuration, but not supported under the first configuration.
15. The method of any preceding embodiment, wherein step (iii) comprises replicating the master data and shared data across the first subset of the plurality of slave database servers according to the first configuration by:
   (iii-b) restructuring the updated master data and/or updated shared data so that it conforms to a database schema of the first configuration; and
   (iii-c) storing the restructured updated master data and/or shared data in the first subset of the plurality of slave database servers.
16. The method of any one of the preceding embodiments, wherein step (iii) is performed, in part or in its entirety, by a database distribution server in communication with the master database server and additionally in communication the first subset of the plurality of slave database servers.
17. The method of embodiment 16 when dependent on embodiment 13, wherein the step (iii-a) is performed by the database distribution server and the step (iii-c) is performed by the first subset of the plurality of slave database servers.
18. The method of embodiment 16 or embodiment 17 when dependent on embodiment 15, wherein the step (iii-b) is performed by the database distribution server and the step (iii-c) is performed by the first subset of the plurality of slave database servers.
19. The method of any one of the preceding embodiments when dependent on embodiment 16, wherein the step (iv), in part or in its entirety, is performed by the database distribution server or an additional one of the database distribution servers.
20. The method of any one of the preceding embodiments, wherein step (iii) comprises replicating the master data and shared data across the first subset of the plurality of slave database servers according to a first replication process which is unique to the first configuration.
21. The method of embodiment 19, wherein the first replication process is compatible only with the first configuration.
22. The method of any one of the preceding embodiments, wherein step (iv) comprises replicating the master data and shared data across the second subset of the plurality of slave database servers according to a second replication process which is unique to the second configuration.
23. The method of embodiment 22, wherein the second replication process is compatible only with the second configuration.
24. The method of any one of the preceding embodiments, wherein the master and shared data are stored in the master database server which is accessible to the plurality of slave database servers, optionally via a database distribution server.
25. The method of any one of the preceding embodiments, wherein the master data is inputable into the database service from an external source only via the master database server.
26. The method of any one of the preceding embodiments, wherein the master data is updatable only within the master database server from an external source, and not via any one of the plurality of slave database servers.
27. The method of any one of the preceding embodiments, wherein the plurality of slave database servers are configured to update the shared data and exchange the shared data with each other via the master database server, optionally via a database distribution server.
28. A computer readable medium comprising computer executable instructions which, when executed by one or more processors, cause the one or more processors to perform the steps of the method of any one of the proceeding embodiments.
29. A master database server comprising:
   memory for storing master data and shared data of a database service; and
   processing circuitry configured to:
      update a configuration of master data of the database service from a first configuration of the database service to a second configuration of the database service;
      update a configuration of shared data of the database service from the first configuration to the second configuration;
      replicate the master data and shared data across a first subset of the plurality of slave database servers according to the first configuration; and
      replicate the master data and shared data across a second subset of the plurality of slave database servers according to the second configuration.
30. The master database server of embodiment 4, wherein the processing server is configured to replicate the master data and shared data across a first subset of the plurality of slave database servers according to the first configuration by sending the master data and shared data according to the second configuration to a database distribution server or a plurality of database distribution servers with a request to replicate the master data and shared data across the first subset of the plurality of slave database servers according to the first configuration, and across a subset of the plurality of slave database servers according to the first configuration.
31. A database distribution server comprising:
   processing circuitry configured to receive master data and shared data of a database service from a master database server and distribute the master data and shared data to a plurality of slave database servers according to a first configuration or a second configuration,
32. A slave database server hosting a local database service comprising:
   processing circuitry configured to:
      receive master data and/or shared data of a first configuration from a master database server, and store the master data and/or shared data of the first configuration in memory;
      update the local database service from the first configuration to a second configuration; and
      if the local database service has been updated from the first configuration to the second configuration, receive master data and/or shared data of a second configuration from the master database server, and store the master data and/or shared data of the second configuration in memory.
33. The slave database server of embodiment 6, wherein the master data and/or shared data is received from the master database server via a database distribution server.
34. The slave database server of embodiment 33, wherein the processing circuitry is further configured to send, once the local database service has been updated from the first configuration to the second configuration prior to receiving the master data and/or shared data, a request to the master database server to obtain the master data and/or the shared data of the second configuration.
35. The slave database server of embodiment 33 or embodiment 34, wherein the processing circuitry is further configured to send, once the local database service has been updated from the first configuration to the second configuration prior to receiving the master data and/or shared data, a slave configuration message to the master database server, wherein the slave configuration message is indicative that the local database service of the database server has been updated from the first configuration to the second configuration.
36. The slave database server of any one of embodiments 6 to 35, wherein the processing circuitry is configured to receive a replication request from the master database server and in response send shared data of the local database service in the first or second configuration, dependent on a current configuration of the local database service, from the memory accessible to the local database server to the master database server for storage therein according to the second configuration.
37. A user equipment device comprising:
   processing circuitry configured to:
      send a request to the slave database server of any one of embodiments 6 to 7 for the master data and/or shared data;
      receive the master data and/or shared data according to the first configuration or second configuration dependent on whether the local database service of the slave database server has been updated from the first configuration to the second configuration; and
      store the received master data and/or shared data in memory accessible to the user equipment device.
38. The user equipment device of embodiment 8, wherein the processing circuitry is configured to send data to the slave database server for storage in the slave database server as shared data.
39. A system comprising:
   the master database server of embodiment 4 or embodiment 30; and
   a plurality of slave database servers each being the slave database server of any one of embodiments 6 to 7, and each being in communication with the master database server.
40. The system of embodiment 10, further comprising the database distribution server of embodiment 5 in communication with the master database server and each slave database server of the plurality of database servers.
41. The system of embodiment 11, further comprising a plurality of user equipment devices each being the user equipment device of embodiment 8 or embodiment 9.
42. The system of embodiment 12, wherein each user equipment device is configured to have restricted access only to a given one of the slave database servers.
43. A method of accessing data, comprising using the user equipment device of embodiment 8 or embodiment 9 to access the master data and/or shared data of the slave database server.
44. A method of updating a slave database comprising using the slave database of any one of embodiments 6 to 7 being configured to provide a database service of a given configuration which is either the first configuration or the second configuration and obtain replicated master and shared data according to the given configuration from the master database server, optionally via the database distribution server of embodiment 5.

## Claims

1. A method for updating a database service hosted by a master database server in conjunction with a plurality of slave database servers, comprising:
(i) updating a configuration of master data of the database service from a first configuration of the database service to a second configuration of the database service;
(ii) updating a configuration of shared data of the database service from the first configuration to the second configuration;
(iii) replicating the master data and shared data across a first subset of the plurality of slave database servers according to the first configuration; and
(iv) replicating the master data and shared data across a second subset of the plurality of slave database servers according to the second configuration.

2. The method of claim 1, wherein the plurality of slave database servers are configured to update the shared data and exchange the shared data with each other via the master database server, optionally via a database distribution server.

3. A computer readable medium comprising computer executable instructions which, when executed by one or more processors, cause the one or more processors to perform the steps of the method of any one of the proceeding claims.

4. A master database server comprising:
memory for storing master data and shared data of a database service; and
processing circuitry configured to:
update a configuration of master data of the database service from a first configuration of the database service to a second configuration of the database service;
update a configuration of shared data of the database service from the first configuration to the second configuration;
replicate the master data and shared data across a first subset of the plurality of slave database servers according to the first configuration; and replicate the master data and shared data across a second subset of the plurality of slave database servers according to the second configuration.

5. A database distribution server comprising:
processing circuitry configured to receive master data and shared data of a database service from a master database server and distribute the master data and shared data to a plurality of slave database servers according to a first configuration or a second configuration.

6. A slave database server hosting a local database service comprising:
processing circuitry configured to:
receive master data and/or shared data of a first configuration from a master database server, and store the master data and/or shared data of the first configuration in memory;
update the local database service from the first configuration to a second configuration; and
if the local database service has been updated from the first configuration to the second configuration, receive master data and/or shared data of a second configuration from the master database server, and store the master data and/or shared data of the second configuration in memory.

7. The slave database server of claim 6, wherein the processing circuitry is configured to receive a replication request from the master database server and in response send shared data of the local database service in the first or second configuration, dependent on a current configuration of the local database service, from the memory accessible to the local database server to the master database server for storage therein according to the second configuration.

8. A user equipment device comprising:
processing circuitry configured to:
send a request to the slave database server of any one of claims 6 to 7 for the master data and/or shared data;
receive the master data and/or shared data according to the first configuration or second configuration dependent on whether the local database service of the slave database server has been updated from the first configuration to the second configuration; and
store the received master data and/or shared data in memory accessible to the user equipment device.

9. The user equipment device of claim 8, wherein the processing circuitry is configured to send data to the slave database server for storage in the slave database server as shared data.

10. A system comprising:
the master database server of claim 4; and
a plurality of slave database servers each being the slave database server of any one of claims 6 to 7, and each being in communication with the master database server.

11. The system of claim 10, further comprising the database distribution server of claim 5 in communication with the master database server and each slave database server of the plurality of database servers.

12. The system of claim 11, further comprising a plurality of user equipment devices each being the user equipment device of claim 8 or claim 9.

13. The system of claim 12, wherein each user equipment device is configured to have restricted access only to a given one of the slave database servers.

14. A method of accessing data, comprising using the user equipment device of claim 8 or claim 9 to access the master data and/or shared data of the slave database server.

15. A method of updating a slave database comprising using the slave database of any one of claims 6 to 7 being configured to provide a database service of a given configuration which is either the first configuration or the second configuration and obtain replicated master and shared data according to the given configuration from the master database server, optionally via the database distribution server of claim 5.
